(19)

Europäisches Patentamt

European Patent Office

Office européen des brevets

(11) **EP 4 492 630 A1**

(12) **EUROPEAN PATENT APPLICATION**
published in accordance with Art. 153(4) EPC

(43) Date of publication:
**15.01.2025 Bulletin 2025/03**

(21) Application number: 23718003.9

(22) Date of filing: **09.03.2023**

(51) International Patent Classification (IPC):
*H02J 13/00* (2006.01)     *G05F 1/147* (2006.01)
*H01F 29/04* (2006.01)     *H02J 3/12* (2006.01)
*H02J 3/00* (2006.01)      *H02J 3/16* (2006.01)

(52) Cooperative Patent Classification (CPC):
**H02J 13/00034; H02J 3/12; H02J 3/16;**
**H02J 13/00002;** G05F 1/14; H01F 29/04;
H02J 3/003; H02J 2203/10; H02J 2203/20

(86) International application number:
**PCT/ES2023/070132**

(87) International publication number:
**WO 2023/170326 (14.09.2023 Gazette 2023/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.03.2022 ES 202230196**

(71) Applicant: Ormazabal Corporate Technology,
A.I.E.
48340 Amorebieta-Etxano (Vizcaya) (ES)

(72) Inventors:
• **GARCÍA RIBOTE, Iker**
**48340 Amorebieta-Etxano (Vizcaya) (ES)**
• **ULASENKA, Alena**
**48340 Amorebieta-Etxano (Vizcaya) (ES)**
• **MULROY, Patrick**
**48340 Amorebieta-Etxano (Vizcaya) (ES)**
• **DEL RÍO ETAYO, Luis**
**48340 Amorebieta-Etxano (Vizcaya) (ES)**

(74) Representative: **Herrero & Asociados, S.L.**
**Edificio Aqua.**
**Calle Agustín de Foxá 4-10**
**28036 Madrid (ES)**

(54) **METHOD FOR DETERMINING THE OPTIMAL VOLTAGE SET POINT AND CONTROL POLICY OF AN AUTOMATIC VOLTAGE REGULATOR FOR TRANSFORMERS WITH ON-LOAD TAP CHANGER**

(57)    The method of the invention dynamically determines the optimal voltage set point for the on-load electrical tap changer (4) and the corresponding parameters of the automatic voltage regulator (3) so that they are in correspondence with each other, and generally comprises the following steps:
- Obtaining (5) at least one variable and/or at least one parameter of an electrical network (6) comprising a high voltage side (7) and a low voltage side (8),

- Generating (11) an electrical network model (6) and launching (12) a load flow or state estimate,
- Calculating or estimating (13) voltage drops and load of electrical network lines (6),
- Determining (14) the optimal voltage set point, and
- Setting (10) the control policy followed by the automatic voltage regulator (3) that controls the on-load tap changer (4).

EP 4 492 630 A1

FIG. 3

**Description**

**OBJECT OF THE INVENTION**

The method for determining the optimal voltage set point and control policy of an automatic voltage regulator, specifically for transformers with on-load tap changers installed in high-voltage electrical transformation centers, aims to dynamically determine the optimal voltage set point for the on-load tap changer and the corresponding parameters of the automatic voltage regulator so that they are in correspondence with each other.

The method of the present invention is capable of giving a result adapting to the available data, the precision of the result being greater the more data there is.

In the present application, the expression "high voltage" means a voltage greater than 1000 volts, while "low voltage" means a voltage lesser than 1000 volts.

**BACKGROUND OF THE INVENTION**

Maintaining the output voltage of high-voltage electrical equipment, such as transformers, within the allowed or desired margins depending on the load circumstances has traditionally been carried out by changing the transformation ratio of said equipment, so that the relationship between the primary and secondary winding voltages of said electrical equipment changes accordingly.

Therefore, high-voltage electrical equipment is provided with a device called electrical tap changer, which can consist of an off-load or on-load tap changer, that is, the change of electrical taps can be carried out with the electrical equipment de-energized (voltage regulation interrupting the load current) or energized (voltage regulation without interrupting the load current). The electrical tap changer increases or reduces the number of turns of the primary winding, thus changing the transformation ratio, or what is the same, varying the voltage in the secondary winding.

Upon the arrival of smart power grids (Smart Grids), voltage fluctuations have increased in the power grid, especially in distribution networks with a high integration of distributed generation sources (small photovoltaic, wind, cogeneration, etc.) and a large deployment of electric vehicles, which makes electricity grids more unstable. On-load tap changers respond effectively and efficiently to voltage fluctuations in load levels. The use of the on-load tap changer (called OLTC from the term "On-Load Tap Changer") is common in electrical equipment, such as, e.g., high/low voltage distribution transformers, whose service cannot be interrupted without severely affecting the distribution system operation, and the corresponding harm on the distribution network users.

The transformer with on-load tap changer allows transforming the voltage level from high voltage to low voltage while automatically regulating the latter within a range compatible with the load to be powered. The on-load tap changer therefore operates automatically, where an automatic voltage regulator (called AVR from the term "Automatic Voltage Regulator") is in charge of giving the pertinent orders to the on load electrical tap changer of increasing or reducing the number of turns of the primary winding of the transformer to obtain the desired voltage in the secondary winding of the transformer.

The automatic voltage regulator makes the decision to increase or reduce the number of turns based on a programmed control policy, these decisions being later instructed to the on load electrical tap changer. The objective of the control policy is to maintain the voltage of the secondary winding of the transformer as close as possible to a voltage set point determined from the set point optimization policies or criteria established by the Distribution System Operator, known by the acronym DSO (from the term "Distribution System Operator") or the policies set by the regulatory limits, making the fewest number of electrical tap changes possible in order to maximize the useful life of the electrical tap changers, avoiding unnecessary electrical tap changes. In short, the control policy defines the behavior of the on-load tap changer in the face of instability in the electrical network and the greater the instability of the electrical network, the more decisive the control policy is to maintain the voltage of the secondary winding of the transformer as close as possible to the voltage set point determined as optimal.

The most widely used control policies are of the hysteresis type, where a tolerance band is defined and the time relative to the voltage deviation from the determined voltage set point is measured. Each control policy leads to a different number of operations, with greater or lesser voltage stability, especially in those electrical networks with a high integration of distributed generation sources.

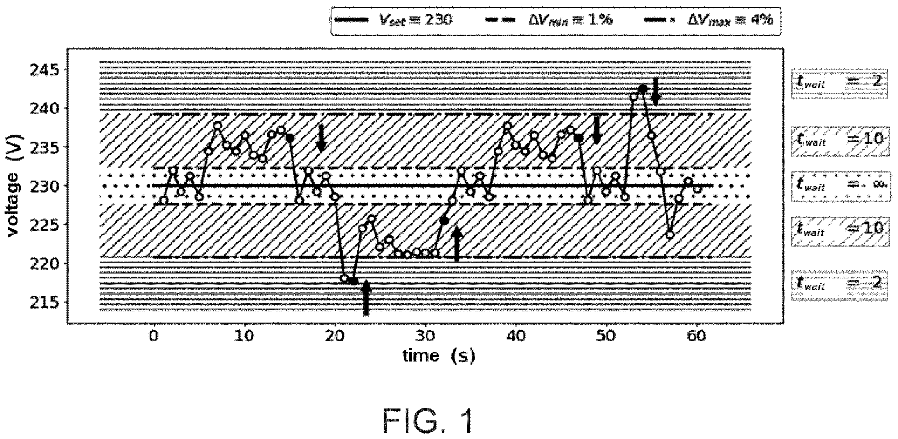

Some manufacturers base their control policy on constant discrete step logic (also known as definite time), with two time delay parameters associated with two levels of voltage deviation. An example of this control policy is the one including a tolerance band around the determined voltage set point where no changes are made to the electrical tap, comprising a slow acting limit that is set between the tolerance band, and said limit is expected, a constant time before making any electrical tap change, and comprising a fast acting limit (greater than the slow acting limit) where a constant time shorter than the previous one is expected before making any electrical tap change, as is represented in figure 1.

Figure 1 shows the voltage fluctuation in the secondary winding of the transformer under the effect of tap changes made by an on-load tap changer guided by an automatic voltage regulator that follows a constant control policy. The abscissa axis represents the time steps (s) and the ordinate axis represents the voltage level (V). The curve represents the voltage values over time, while the black points correspond to moments in which the decision to change the tap has been made. The set point given is 230V, therefore, the central band (about 230V) represents the allowable tolerance range or allowable tolerance band that corresponds to a ± 1% deviation from the voltage set point and where no tap changes are made. After the first allowable tolerance band around the set point (±1 %), there can be seen the ranges (symmetrical, upper and lower) corresponding to the one defined as the slow tolerance range. This part comprises deviations from the set point between ±1% and ±4%, with an associated time allowance of 10 seconds. As it can be seen in figure 1, every time there are 10 consecutive values of the curve in any of these bands, the corresponding tap change is made (decreasing the tap number when the range is positive and increasing the tap number when the range is negative), influencing the following voltage values of the curve. Similarly, the following ranges from ±4% deviations are known as the fast tolerance range, and have an associated temporary allowance of 2 seconds.

This type of control policy represented in figure 1, that is, the constant control policy, has the drawback that it does not adapt progressively depending on the load circumstances that may exist at any moment or in each time window, and therefore, consumers may be affected by longer-lasting over- and/or under-voltage situations, or even by a greater number of them.

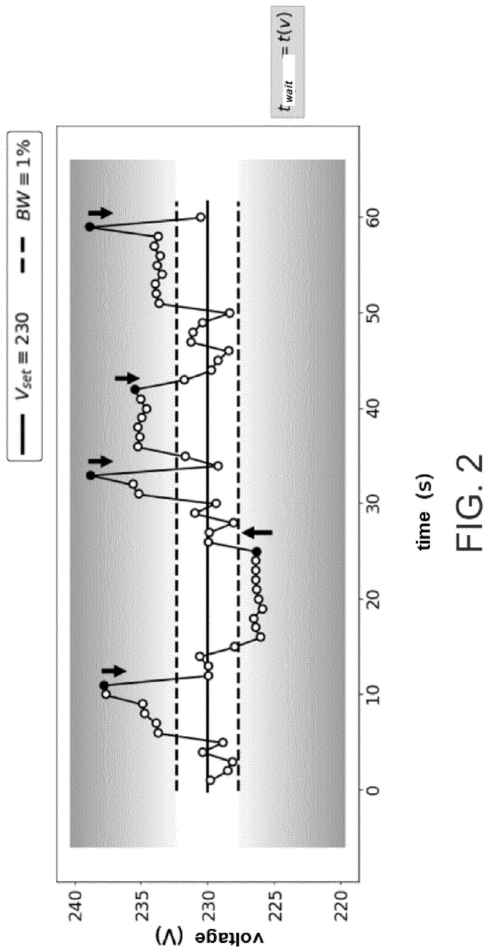

Other manufacturers base their control policy on dynamically calculating the waiting time before each change of electrical tap, relating the deviation from the voltage set point and time in a functional way, this relationship being linear or non-linear (integral). The linear case is when the function that relates the waiting time and the voltage deviation is linear. While the non-linear or integral case is when the waiting time before making any change of electrical tap is variable and the function that relates said time and the voltage deviation from the determined voltage set point is not linear, as is represented in figure 2.

Figure 2 shows the voltage fluctuation in the secondary winding of the transformer under the effect of the tap changes made by an on-load tap changer guided by an automatic voltage regulator that follows a non-linear or integral control policy. The abscissa axis represents the time steps (s) and the ordinate axis represents the voltage level (V). The curve represents the voltage values over time, while the black points correspond to moments in which the decision to change the tap has been made. The set point given is 230V, therefore, the central band (about 230V) represents the allowable tolerance range or allowable tolerance band that corresponds to a ± 1% deviation from the voltage set point and where no tap changes are made. Unlike figure 1, after the first allowable tolerance band around the set point (±1%), there is a single band, however, on this occasion it consists of a time gradient, that is, the greater the deviations from ±1% less will be the allowability time, as it can be seen in the voltage curve, where in the event of extreme variations, the tap changes are practically instantaneous. In this case, the waiting times are defined by a non-linear function in such a way that $t_{wait} = t(V_{deviation})$, that is, given a voltage deviation, the waiting time is calculated through the corresponding function.

The linear type control policy adapts progressively to the load circumstances that may exist at different moments or time windows, but on the other hand it involves the drawback that said policy responds in the same way to small and large deviations from the voltage set point.

In the control policy of the non-linear or integral type, unlike the linear type, the adaptation is progressive and variable, giving greater importance to larger deviations. However, this entails a greater number of tap changes, especially for transformation centers with large voltage fluctuations, reducing the useful life of the on-load tap changer.

Due to the existence of multiple and diverse control policy strategies, as well as the fact that manufacturers of on-load tap changers often define the control policies followed by automatic voltage regulators with a variety of formalisms, the need to define a methodology determining the optimal control policy for each case according to the given characteristics is considered necessary.

There are examples of the state of the art on methods to determine the optimal voltage set point, as well as to determine the control policy to be followed to maintain the voltage of the secondary winding of the transformer as close as possible to said optimal voltage set point. Both the voltage set point and the control policy are determined for a first established time window, having to define them again for a second time window once said first time window has been exceeded, etc.

These methods, which are known from the state of the art, comprise a series of steps, among which is obtaining the parameters of the electrical network, such as the length, section and path of the cables, electrical magnitudes, GPS positioning of the grid connection points, meters connected to each grid connection point and its corresponding line and phase connection, type of meters, time series of consumption and supply, generators, batteries, electric chargers, etc.

In connection with this step relating to obtaining the electrical magnitudes, in the examples of the state of the art only one electrical magnitude measurement is contemplated, for example a voltage measurement. Several voltage measurements are not taken from different electrical network devices in order to estimate the reference measurement, that is, the redundancy of measurements is not used, which reduces the reliability of the measurement that must be taken as a reference, since that the only measurement that is made may fail, there may be uncertainty in the measurement, etc.

Likewise, the device in charge of processing said measurement acquired to estimate the reference measurement is not at the level of the transformation center where the transformer is located with the electrical on load tap changer, and this may mean an increase in the response time when carrying out tap change operations, for example, due to a communication problem between the transformation center and the remote center where the device in charge of processing the acquired measurement is located.

## DESCRIPTION OF THE INVENTION

The present invention refers to a method for determining the optimal voltage set point and control policy of an automatic voltage regulator, specifically for distribution transformers with on-load tap changers installed in high-voltage electrical transformation centers, which aims to solve any and all of the problems mentioned above.

The method of the invention allows dynamically determining, during at least one established time window, the optimal voltage set point for the on-load tap changer and the corresponding parameters of the automatic voltage regulator so that they are in correspondence with each other. The method is capable of giving a result adapting to the available data, the precision of the result being greater the more data there is.

The method for determining the optimal voltage set point and control policy generally includes the following steps:

- Establishing a time window during which the optimal voltage set point and the control policy of the automatic voltage regulator are determined,
- Obtaining at least one variable (for example, voltage magnitude and angle at all nodes and phases, active and reactive power flows per phase and neutral in all lines and connections, generation, active and reactive loads, etc.) and/or at least one parameter (for example the length, section, impedance and capacity of the cables, position of the transformer tap, etc.) of an electrical network that includes a high voltage side and a low voltage side, whether provided by the operator of the distribution system, acquired by measurement, by estimation and/or other technologies,
- Generating an electrical network model and launching a load flow or state estimation,
- Calculating or estimating voltage drops and load of electrical network lines,
- Determining the optimal voltage set point, and
- Setting the control policy followed by the automatic voltage regulator that controls the on-load tap changer.

More specifically, in the step referring to obtaining the variables and/or parameters of the electrical network, the acquisition of said variables and/or parameters can be carried out through at least one state estimator and/or parameter estimator that can be found at the level of the electrical transformation center within the same transformation center where the transformer is located with the electrical on load tap changer, as a cloud service or in another remote physical location, collecting at least one measurement available from the electrical network, both on the high voltage side and on the low voltage side of the network. In this way, measurement redundancy is applied with the acquisition of all available measurements, thus increasing the reliability of the estimated reference measurement. On the other hand, in case of having the state estimator in the same transformation center where there are located the transformer with the electrical on load tap changer and the automatic voltage regulator, there are avoided communication problems that could cause the increase of the response time when carrying out tap change operations.

The method of the invention can also comprise a step for calculating load predictions on the low voltage side of the electrical network, which is based on a first stage to obtain historical data external to the electrical network, such as variables meteorological conditions such as rainfall, humidity, temperature range, seasonality, days/hours of sunshine, etc., and in a second stage to obtain historical consumption data and/or measurements of the electrical network that are related to the characteristics inherent to each country/region, such as anthropogenic or meteorological factors. These factors influence the behavior of energy demand and the capacity of the electrical system, taking into account anthropogenic factors that allow classifying the type of days (working, weekends, holidays, etc.) and meteorological factors such as precipitation, humidity, temperature range, seasonality, etc. This step for calculating load predictions on the low voltage side of the electrical network includes a third stage of generating a predictive model based on supervised learning algorithms trained with the data obtained in the first stage of obtaining external historical data to the electrical network and in the second stage of obtaining historical consumption data and/or measurements of the electrical network.

In this way, the predictive model based on supervised learning algorithms calculates load predictions on the low voltage side of the electrical network from historical consumption data and/or measurements and/or estimates of the electrical network. In this way, future values can also be predicted taking into account data in real or quasi-real time of consumption and/or measurements of the electrical network, as well as meteorological variables.

Based on the available power grid data, a power grid model is generated in the next step. This electrical network model can be generated through different existing simulation tools, for example, through OpenDSS™, PandaPower™, PowerFactory™, Simulink™, etc. Once the electrical network model has been generated, the load flow launch continues, being able to feed this load flow with the previously calculated low-voltage side load predictions, then applying the load flow in the generated electrical network model, where in a next verification stage it is checked if there is convergence of the load flow. Thus, the convergence of the load flow allows the calculation of the voltage drops for each point of connection to the network (PCR) and load of lines of the electrical network, but the non-convergence of the load flow leads to the verification of at least one of the previous steps and to the verification of the consistency of the data entered into the predictive model based on a supervised learning algorithm, if used. As an alternative to load flow, which requires an electrical network model and very high reliability measurements, a state estimator can be used that can define the statistically most probable electrical state of the observable network based on the information it receives as entry (even if it is incomplete or not exact). The state estimator detects and identifies erroneous measurements, eliminating them from the estimation process, and correcting them in case of redundancy.

Likewise, in the case of not having sufficient data to generate a network model, the method of the invention includes an alternative step for estimating the voltage drops. This alternative estimation step may consist of the DSO's expert knowledge of the electrical network and/or methods of estimation and/or measurement of voltage drops without the need for network models (sensors, statistical models or others).

Once the voltage drops and loads of the electrical network lines have been calculated or estimated, a step referring to the determination of the optimal voltage set point is carried out. This step of determining the optimal voltage set point can comprise a first stage of obtaining the policies determined by the DSO, for example, to increase the voltage (in case of admitting additional loads, heat pumps, electric vehicle chargers, etc.) or voltage reduction (in case of admitting low voltage distributed generation), or minimizing distribution losses or obtaining the policies set by the regulatory limits in the absence of policies determined by the DSO. The determination of the optimal voltage set point consists of an iterative process of calculation and verification during the established time window. The type of calculation depends on the determined policy and, either through the policies obtained from the DSO or through default policies that ensure voltage levels within the regulatory limits, the optimal voltage set point is calculated in a second stage. Finally, this step for determining the optimal voltage set point comprises a third stage of iterative verification of the optimal voltage set point during the established time window, using quasi-real-time data from the electrical network, mainly from sentinel meters, data from advanced low voltage supervision and other devices such as sensors. Therefore it is established the optimal voltage set point in case of having a favorable result in said third verification stage, but in case of having a unfavorable result modifications are applied, and the third verification stage is repeated again.

Finally, the step of setting the control policy followed by the automatic voltage regulator includes, in turn, a first stage of obtaining or estimating parameters and/or variables of the transformer, such as, for example, determining the current tap of the transformer, the number of electrical taps and the variation in voltage between electrical taps. In a second stage, a simulation module based on control theory for discrete times is generated, where the behavior of the on-load tap changer is measured. Next, in a third stage, the conditions that resolve whether a set of parameters that define the control policy is feasible or not are determined, for example, that they are within the range established by the regulatory limits. This control policy setting step includes a fourth stage of launching the simulations and calculating the metrics, such as the number of electrical tap changes, error between the solution and the set point, etc. In a fifth stage comprising this control policy setting step, the optimal parameters defining the control policy are selected, which can comprise a slow tolerance voltage limit, a waiting time associated with the slow tolerance, a fast tolerance voltage limit, a waiting time associated with the fast tolerance and a functional relationship between both voltage limits.

## DESCRIPTION OF THE FIGURES

Figure 1.- Shows, schematically, a graph that represents an example of control policy of the state of the art based on a logic of constant discrete steps, with two time delay parameters associated with two levels of voltage deviation.

Figure 2.- Shows, schematically, a graph that represents an example of control policy of the state of the art based on dynamically calculating the waiting time before each change of electrical tap.

Figure 3.- Shows a block diagram of the method for determining the optimal voltage set point and control policy of the present invention.

Figure 4.- Shows a representative block diagram of the stages comprising the step for calculating load predictions on the low voltage side.

Figure 5.- Shows a representative block diagram of the stages comprising the control policy setting step followed by the automatic voltage regulator that controls the on-load tap changer.

Figure 6.- Shows a representative block diagram of the stages comprising the step for determining the optimal voltage set point.

Figure 7.- Shows, schematically, an electrical transformation center with a distribution transformer equipped with an on-load tap changer where the method for determining the optimal voltage set point and control policy of the invention is applied.

Figure 8a.- Shows, schematically, a graph representing an example of the control policy followed by the automatic voltage regulator that controls the on-load tap changer and that is based on a logic of constant discrete steps.

Figure 8b.- Shows, schematically, a graph representing an example of the control policy followed by the automatic voltage regulator that controls the on-load tap changer and that is based on dynamically calculating the waiting time before each change of electrical tap, where the function that relates the waiting time before making any change of electrical tap and the voltage deviation from the optimal voltage set point is linear.

Figures 8c-8d.- Shows, schematically, graphic paths representing an example of the control policy followed by the automatic voltage regulator that controls the on-load tap changer and that is based on dynamically calculating the waiting time before each electrical tap change, where the function that relates the waiting time before making any electrical tap change and the voltage deviation from the optimal voltage set point is not linear.

Figure 9.- Shows, schematically, several graphs representing an example of simulation and selection of the optimal control policy.

## PREFERRED EMBODIMENT OF THE INVENTION

An example of a preferred embodiment is described below, making reference to the aforementioned figures, without this limiting or reducing the scope of protection of the present invention.

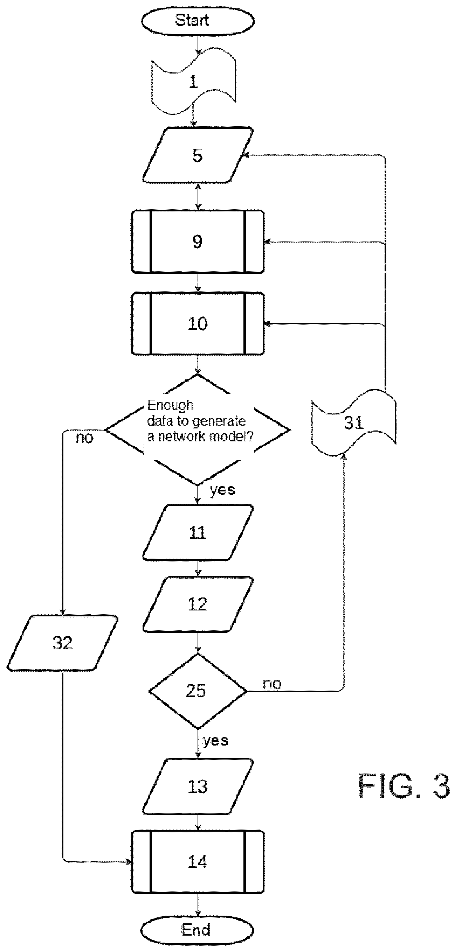

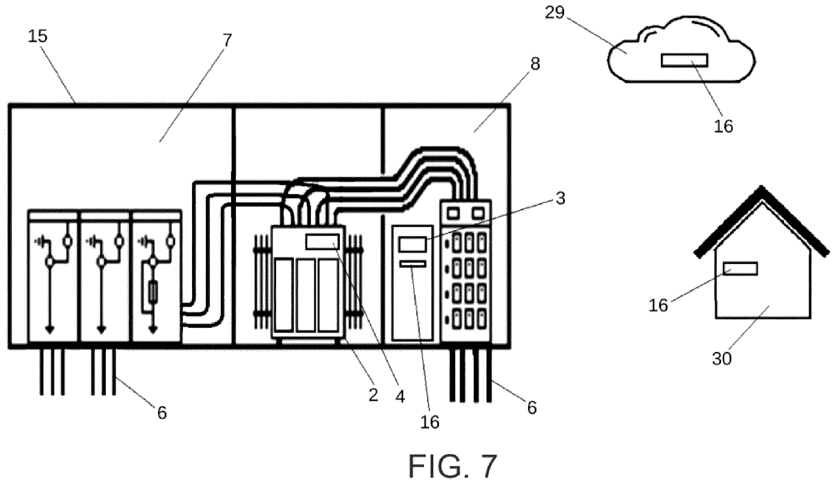

Figure 3 shows a method for determining the optimal voltage set point and control policy of an automatic voltage regulator (3), applicable to distribution transformers (2) with on-load tap changer (4) installed in high voltage electrical transformation centers (15), as shown in figure 7.

The method of the invention comprises a series of steps, which, being executed during an established time window (1), allow to dynamically determine the optimal voltage set point, as well as determine the control policy to be followed by the automatic voltage regulator (3) in order to maintain the voltage of the secondary winding of the transformer (2) as close as possible to said optimal voltage set point and making the fewest possible electrical tap changes. As shown in figure 3, the method comprises the following steps:

- Establishing (1) a time window during which the optimal voltage set point and the control policy of the automatic voltage regulator are determined,
- Obtaining (5) at least one variable and at least one parameter of an electrical network (6) comprising a high voltage side (7) and a low voltage side (8),
- Generating (11) an electrical network model (6) and launching (12) a load flow or state estimate,
- Calculating or estimating (13) voltage drops and load of electrical network lines (6),
- Determining (14) the optimal voltage set point, and
- Setting (10) the control policy followed by the automatic voltage regulator (3) that controls the on-load tap changer (4).

As shown in figures 3 and 7, the method comprises the step of obtaining (5) at least one variable and at least one parameter of the electrical network (6) with a high voltage side (7) and a low voltage side (8), where said parameters are acquired by means of a state estimator and/or parameter estimator (16) that can be at the level of the transformation center (15), as a cloud service (29) or in another remote physical location (30), and which collects at least one measurement available from the high voltage side (7) and/or from the low voltage side (8) of the electrical network (6). The variables or parameters of the electrical network (6) can be, for example, the voltage magnitude and angle in all nodes and phases, active and reactive power flows per phase and neutral in all lines and connections, generation, active and reactive loads, or the length, section, impedance and capacity of the cables, position of the transformer tap, etc.

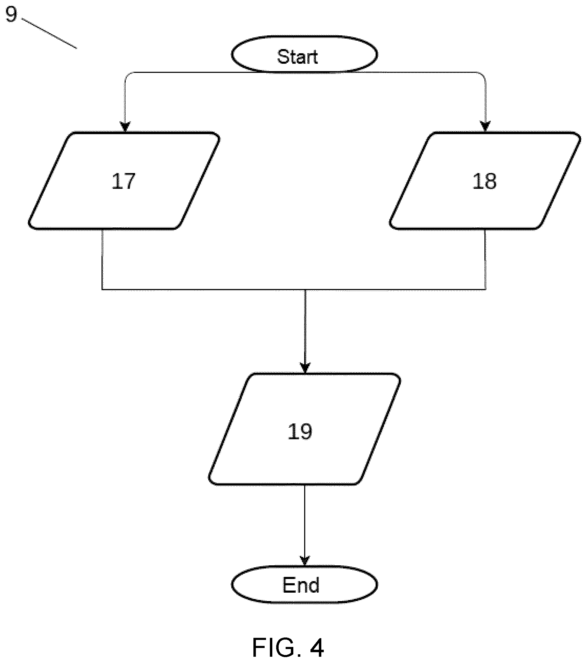

In a next step, as it can be seen in figures 3 and 4, a calculation (9) of load predictions of the low voltage side (8) of the electrical network (6) is executed. This calculation step (9) comprises a first stage (17) to obtain historical data external to the electrical network (6) such as, for example, meteorological variables such as rainfall, humidity, temperature range, seasonality, days/hours of sun, etc., and a second stage (18) to obtain historical consumption data and/or measurements of the electrical network (6). In addition, it comprises a third stage (19) for the generation of a predictive model based on supervised learning algorithms trained with the data obtained in the first stage (17) for obtaining historical data external to the electrical network and in the second stage (18) for obtaining historical consumption data and/or measurements of the electrical network (6). In this way, the predictive model based on supervised learning algorithms calculates the load predictions for the low voltage side (8) of the electrical network (6) based on historical consumption data and/or measurements or estimates from the electrical network (6).

The method of the invention, as shown in Figure 3, further comprises the step of generating (11) an electrical network model (6). This electrical network model (6) can be generated through different existing simulation tools, for example, through OpenDSS™, PandaPower™, PowerFactory™, Simulink™, etc. Once the electrical network model (6) has been generated, the load flow is launched (12), and this load flow can be fed with the load predictions on the low voltage side (8) calculated previously. This load flow is applied in the electrical network model (6) generated, where in a following stage of verification (25) it is verified if there is convergence of the load flow. Thus, the convergence of the load flow allows the calculation or estimation (13) of voltage drops for each point of connection to the network (PCR) and load of lines of the electrical network (6), but the non-convergence of the load flow leads to the verification (31) of at least one of the previous steps (5, 9, 10) and to the verification of the consistency of the data entered into the predictive model based on a supervised learning algorithm, if used.

Likewise, in the case of not having sufficient data to generate a network model, the method of the invention includes an alternative step of estimating (32) the voltage drops. This alternative estimation step (32) may consist of the DSO's expert knowledge of the electrical network and/or methods of estimation and/or measurement of voltage drops without the need for network models, for example, obtaining the voltage drops through sensors, statistical models or others.

Given that the flow of charges requires very high reliability measurements, a state estimator can be used, as shown in figure 3, which can define the statistically most probable electrical state of the observable network based on the information that receives as input (even if it is incomplete or not exact). The state estimator detects and identifies erroneous measurements, removes them from the estimation process, and corrects them if there is redundancy.

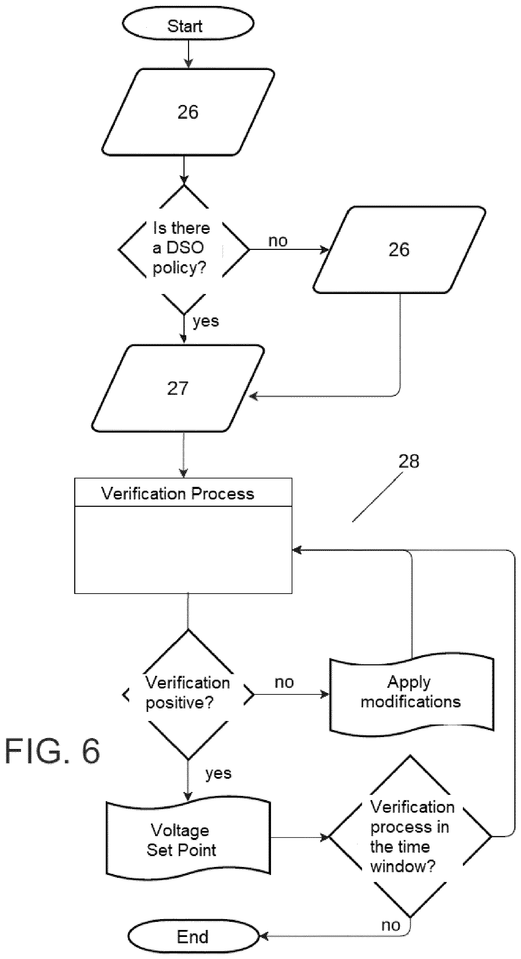

Once the voltage drops and load of the electrical network lines (6) have been calculated or estimated, it is proceeded with the step of determining (14) the optimal voltage set point, as it can be seen in figure 3. This step of determining (14) the optimal voltage set point can comprise a first stage (26) of obtaining the policies determined by the DSO or obtaining the policies set by the regulatory limits in the event that there are no policies determined by the DSO, as shown in Figure 6. By means of the policies obtained in said first stage (26), the optimal voltage set point is calculated in a second stage (27). This step of determining (14) the optimal voltage set point comprises a third stage (28) of iterative verification of the optimal voltage set point, this verification being carried out within the established time window (1), using quasi-real-time data from the electrical network (6), mainly from sentinel meters, advanced low-voltage supervision data and other devices such as for example the sensors. Therefore, the optimal voltage set point calculated is established in case of having a favorable result in said third stage (28) of verification, but in case of having an unfavorable result, modifications are applied and the third stage (28) of verification is repeated again. In the event that the established time window (1) is exceeded or outside of it, it is returned to the start of the method, establishing a new time window for which the method is started again.

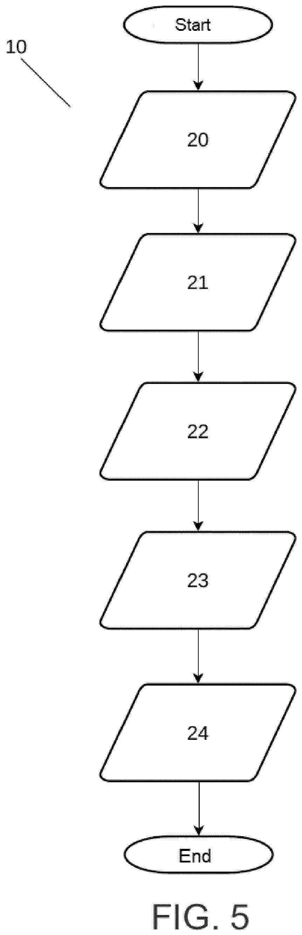

Likewise, the method of the invention includes the step referring to the setting (10) the control policy followed by the automatic voltage regulator (3) that controls the on-load electrical tap changer (4), as shown in Figure 3. This step of setting (10) the control policy, as it can be seen in Figure 5, comprises a first stage (20) of obtaining or estimating parameters and variables of the transformer (2), such as, for example, the determination of the current tap of the transformer, the number of electrical taps and the variation of the voltage between electrical taps. In a second stage (21) a simulation module based on control theory for discrete times is generated, where the behavior of the on-load tap changer (4) is measured. Next, in a third stage (22) the conditions that resolve whether a set of parameters that define the control policy is feasible or not are determined, for example, that they are within the range established by the regulatory limits. This control policy setting step (10) comprises a fourth stage (23) for launching the simulations and calculating the metrics, such as the number of electrical tap changes, error between the solution and the set point given, etc. In a fifth stage (24) comprising this control policy setting step (10), the optimal parameters defining the control policy are selected, which may include a slow tolerance voltage limit, an associated waiting time to the slow tolerance, a fast tolerance voltage limit, an associated waiting time to the fast tolerance and a functional relationship between both voltage limits.

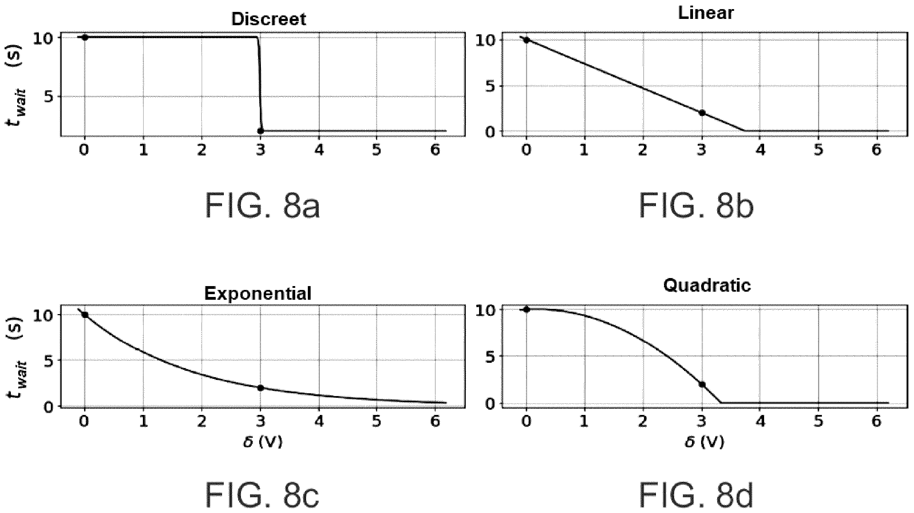

Figures 8a-8d show several examples of control policy that can be obtained by the method of the present invention, and specifically four examples are shown that are based on a logic of constant discrete steps (also known as definite time), where a constant time is waited before making any electrical tap change, see figure 8a, as well as dynamically calculating the waiting time before each electrical tap change, see figures 8b, 8c, and 8d. Figure 8b corresponds to a control policy where the deviation from the voltage set point and the waiting time comprise a linear relationship, while figures 8c and 8d show non-linear type control policies, that is, the waiting time before making any change to the electrical tap is variable and the function that relates said time and the voltage deviation from the determined voltage set point is not linear.

Specifically, figure 8c shows an example of a non-linear control policy and of the exponential type, while figure 8d shows an example of a non-linear control policy and of the quadratic type.

In Figures 8a-8d, four different functional relationships can be seen between the voltage deviation from the tolerance band and the waiting time. The ordinate axis represents the waiting time, while the abscissa axis represents the voltage deviation from the tolerance band.

Figures 8a, 8b, 8c and 8d correspond to discrete, linear, exponential and quadratic relationships respectively. They are different functional relations, but they are all obtained from the same basic parameters, which are listed in the following table:

| Tolerance Band | T1 | V1 | T2 | V2 |
|---|---|---|---|---|
| 1% | 10 seconds | 1% | 2 seconds | 4% |

In other words, firstly, there is a tolerance band of 1% from the voltage set point, then there is established a first level of 1%-10s and a second level of 4%-2s. How this time-voltage relationship fluctuates between dimensions depends on the selected curve. For example, in the case of figure 8a, the waiting time is 10 seconds between 1% and 4% (0% and 3% with respect to the band) and 2 seconds for deviations greater than 4% (3% from the band).

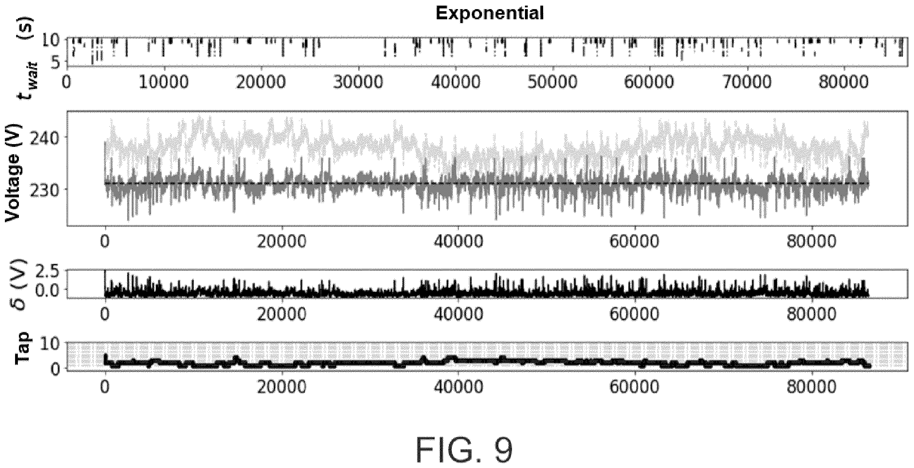

Figure 9 shows an example of simulation and selection of the optimal control policy, obtained once executed the fourth stage (23) of launching the simulations and calculating the metrics and the fifth stage (24) of selecting the optimal parameters that define the control policy.

After simulating more than 200 control policies, the main results are shown in the following table. The number of simulations depends on the possible feasible parameters.

| | Discreet | Linear | Exponential | Quadratic |
|---|---|---|---|---|
| Number of simulations | 72 | 58 | 72 | 62 |
| Mean MSE | 1,813 | 1,939 | 1,639 | 1,730 |
| Best MSE | 1,778 | 1,657 | 1,580 | 1,662 |
| Mean MAPE | 0.442 | 0.460 | 0.428 | 0.435 |
| Best MAPE | 0.440 | 0.429 | 0.421 | 0.430 |

After, the control policy with the best results follows an exponential functional relationship, in addition, the basic parameters are as following:

| Voltage set point | T1 | V1 | T2 | V2 |
|---|---|---|---|---|
| 236V | 61 seconds | 1% | 3 seconds | 4% |

Figure 9 shows the results of the simulation carried out for this control policy. From top to bottom, the first figure shows the calculated waiting times, the second shows the original voltage (light grey) vs. the simulated voltage when applying the policy (dark grey). Then, in the following figure it can be seen the voltage deviation from the set point, and finally, the transformer tap where the on-load tap changer would be. The abscissa axis represents the time instant and the ordinate axis (from top to bottom) represent the seconds, voltage, voltage and tap, respectively.

The selected policy is given by the following expression:

$$P(\delta) = 61 * e^{-0.908193167684474 * \delta}$$

**Claims**

1. Method for determining an optimal voltage set point and a control policy for an automatic voltage regulator (3) for transformers (2) with on-load tap changers (4) installed in transformation centers (15), comprising the following steps:

   - Establishing (1) a time window during which the optimal voltage set point and the control policy of the automatic

9

voltage regulator (3) are determined,

- Obtaining (5) at least one variable and/or at least one parameter of an electrical network (6) comprising a high voltage side (7) and a low voltage side (8),
- Generating (11) an electrical network model (6) and launching (12) a load flow or state estimate,
- Calculating or estimating (13) voltage drops and load of electrical network lines (6),
- Determining (14) the optimal voltage set point,
- Setting (10) the control policy followed by the automatic voltage regulator (3) that controls the on-load tap changer (4),

**characterized in that** the step of obtaining (5) at least one variable or a parameter of the electrical network (6) comprises the acquisition of said at least one variable or said at least one parameter by means of at least one state estimator and/or parameter estimator (16) at the transformation center level (15), as a cloud service (29) or in another physical location (30), which collects at least one measurement available from the high voltage side (7) and/or from the low voltage (8) of the electrical network (6).

2. Determination method according to claim 1, **characterized in that** it comprises a step of calculating (9) load predictions on the low voltage side (8) of the electrical network (6).

3. Determination method according to claim 2, **characterized in that** the variables or parameters of the electrical network (6) comprise at least the voltage magnitude and angle in all nodes and phases, active and reactive power flows per phase and neutral in all lines and connections, and at least the length, section, impedance, capacity of the cables and position of the transformer tap.

4. Determination method according to claim 3, **characterized in that** the step of calculating (9) load predictions on the low voltage side (8) comprises a first stage (17) to obtain historical data external to the electrical network (6) and a second stage (18) to obtain historical consumption data and/or measurements and/or estimates from the electrical network (6).

5. Determination method according to claim 4, **characterized in that** the step of calculating (9) load predictions on the low voltage side (8) comprises a third stage (19) of generating a predictive model based on supervised learning algorithms trained with the data obtained in the first stage (17) and in the second stage (18).

6. Determination method according to claim 5, **characterized in that** the predictive model based on supervised learning algorithms calculates load predictions on the low voltage side (8) of the electrical grid (6) based on historical consumption data and/or measurements and/or estimates of the electrical grid (6).

7. Determination method according to any of the preceding claims, **characterized in that** the step of generating (11) an electrical network model (6) and launching (12) a load flow or state estimation comprises a step (25) of verifying the convergence of the load flow or state estimation.

8. Determination method according to any of claims 1 to 6, **characterized in that** it comprises a step of estimating (32) the voltage drops based on the expert knowledge of the electrical network of the DSO and/or methods of estimating and / or measuring voltage drops without the need for network models.

9. Determination method according to claim 7, **characterized in that** the convergence of the load flow or state estimation allows the calculating or estimating (13) of voltage drops and load of lines of the electrical network (6), while the non-convergence of the load flow or the state estimation entails the verification (31) of at least one of the previous steps (5, 9, 10) and the verification of the coherence of the data entered in the predictive model based on a supervised learning algorithm.

10. Determination method according to claim 1 or 3, **characterized in that** the step of determining (14) the optimal voltage set point comprises a first stage (26) for obtaining the policies determined by the Distribution System Operator.

11. Determination method according to claim 1 or 3, **characterized in that** the step of determining (14) the optimal voltage set point comprises a first stage (26) for obtaining the policies set by the regulatory limits.

12. Determination method according to claim 10 or 11, **characterized in that** the step of determining (14) the optimal voltage set point comprises a second stage (27) where the optimal voltage set point is calculated based on the policies set by the Distribution System Operator or regulatory limits.

13. Determination method according to claim 12, **characterized in that** the step of determining (14) the optimal voltage set point comprises a third stage (28) of verification of the optimal voltage set point during the established time window (1) using quasi-real-time data from the electrical network (6), establishing the optimal voltage set point calculated in case of having a favorable result in the third stage (28) of verification or applying modifications and repeating the third verification stage (28) again, in case of an unfavorable result.

14. Determination method according to claim 1 or 3, **characterized in that** the step of setting (10) the control policy followed by the automatic voltage regulator (3) comprises a first stage (20) of obtaining or estimating parameters and/or transformer variables (2).

15. Determination method according to claim 14, **characterized in that** the step of setting (10) the control policy followed by the automatic voltage regulator (3) comprises:

- a second stage (21) for generating a module for simulating the behavior of the on-load tap changer (4) based on control theory for discrete times.
- a third stage (22) for determining the conditions that resolve whether a set of parameters that define the control policy is feasible or not.
- a fourth stage (23) for launching the simulations and calculating the metrics.
- a fifth stage (24) for selecting the optimal parameters that define the control policy.

FIG. 1

FIG. 2

FIG. 3

9

Start

17

18

19

End

FIG. 4

FIG. 5

FIG. 6

FIG. 7

Discreet

FIG. 8a

Linear

FIG. 8b

Exponential

$\delta$ (V)

FIG. 8c

Quadratic

$\delta$ (V)

FIG. 8d

$t_{wait}$ (s)

FIG. 9

## INTERNATIONAL SEARCH REPORT

| | International application No |
|---|---|
| | PCT/ES2023/070132 |

**A. CLASSIFICATION OF SUBJECT MATTER**

INV. H02J13/00 G05F1/147 H01F29/04 H02J3/12 H02J3/00
H02J3/16

ADD.

According to International Patent Classification (IPC) or to both national classification and IPC

**B. FIELDS SEARCHED**

Minimum documentation searched (classification system followed by classification symbols)

H02J G05F H01F

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | DISFANI VAHID RASOULI ET AL: "Model predictive on-load tap changer control for high penetrations of PV using high resolution resources assessment with sky imager", 2016 IEEE POWER AND ENERGY SOCIETY GENERAL MEETING (PESGM), IEEE, 17 July 2016 (2016-07-17), pages 1-5, XP032999417, DOI: 10.1109/PESGM.2016.7741275 [retrieved on 2016-11-10] | 1-3,7-15 |
| Y | pages 1-5 | 4-6 |
| | ----- | |
| Y | KR 2016 0036313 A (KOREA ELECTRIC POWER CORP [KR]) 4 April 2016 (2016-04-04) paragraphs [0055] - [0059] | 4-6 |
| | ----- | |
| | -/-- | |

| | |
|---|---|
| [x] Further documents are listed in the continuation of Box C. | [x] See patent family annex. |

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance;; the claimed invention cannot be considered novel or cannot be considered to involve an inventive step when the document is taken alone

"Y" document of particular relevance;; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 29 June 2023 | 07/07/2023 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Lorenzo Feijoo, S |

Form PCT/ISA/210 (second sheet) (April 2005)

page 1 of 3

## INTERNATIONAL SEARCH REPORT

| International application No |
| --- |
| PCT/ES2023/070132 |

C(Continuation). DOCUMENTS CONSIDERED TO BE RELEVANT

| Category* | Citation of document, with indication, where appropriate, of the relevant passages | Relevant to claim No. |
| --- | --- | --- |
| A | US 2016/231756 A1 (BAERTHLEIN EVA-MARIE [DE] ET AL) 11 August 2016 (2016-08-11) abstract paragraphs [0026] - [0067] ----- | 1-15 |
| X | BAERTHLEIN E-M ET AL: "Variable voltage set point control of tap changers in distribution grids", IEEE PES INNOVATIVE SMART GRID TECHNOLOGIES, EUROPE, IEEE, 12 October 2014 (2014-10-12), pages 1-6, XP032730735, DOI: 10.1109/ISGTEUROPE.2014.7028879 [retrieved on 2015-01-30] pages 1-6 ----- | 1-3,7-15 |
| X | NEAGU BOGDAN CONSTANTIN ET AL: "Optimal Voltage Control in Power Distribution Networks Using an Adaptive On-Load Tap Changer Transformers Techniques", 2019 INTERNATIONAL CONFERENCE ON ELECTROMECHANICAL AND ENERGY SYSTEMS (SIELMEN), IEEE, 9 October 2019 (2019-10-09), pages 1-6, XP033664112, DOI: 10.1109/SIELMEN.2019.8905904 [retrieved on 2019-11-18] pages 1-6 ----- | 1-3,7-15 |
| X | BAGHSORKHI SINA SADEGHI ED - RESENER MARIANA ET AL: "A mixed-integer formulation of OLTC dynamics to minimize distribution and subtransmission tap changes induced by wind and solar power variations", ENERGY SYSTEMS, SPRINGER BERLIN HEIDELBERG, BERLIN/HEIDELBERG, vol. 9, no. 3, 14 May 2018 (2018-05-14), pages 793-829, XP036549793, ISSN: 1868-3967, DOI: 10.1007/S12667-018-0281-0 [retrieved on 2018-05-14] pages 806-825 ----- | 1-3,7-15 |
| X | EP 2 506 384 A1 (GEN ELECTRIC [US]) 3 October 2012 (2012-10-03) paragraphs [0006] - [0023] ----- | 1-3,7-15 |

-/--

Form PCT/ISA/210 (continuation of second sheet) (April 2005)

page 2 of 3

## INTERNATIONAL SEARCH REPORT

International application No

PCT/ES2023/070132

C(Continuation). DOCUMENTS CONSIDERED TO BE RELEVANT

| Category* | Citation of document, with indication, where appropriate, of the relevant passages | Relevant to claim No. |
|---|---|---|
| A | MIRBAGHERI S MINA ET AL: "Voltage Control in Active Distribution Grids: A Review and a New Set-Up Procedure for Local Control Laws", 2018 INTERNATIONAL SYMPOSIUM ON POWER ELECTRONICS, ELECTRICAL DRIVES, AUTOMATION AND MOTION (SPEEDAM), IEEE, 20 June 2018 (2018-06-20), pages 1203-1208, XP033392842, DOI: 10.1109/SPEEDAM.2018.8445387 [retrieved on 2018-08-23] page 1203, column 1207 ----- | 1-15 |

Form PCT/ISA/210 (continuation of second sheet) (April 2005)

page 3 of 3

## INTERNATIONAL SEARCH REPORT
### Information on patent family members

| | International application No |
|---|---|
| | **PCT/ES2023/070132** |

| Patent document cited in search report | Publication date | Patent family member(s) | Publication date |
|---|---|---|---|
| KR 20160036313 A | 04-04-2016 | NONE | |
| US 2016231756 A1 | 11-08-2016 | US 2016231756 A1<br>WO 2016130511 A1 | 11-08-2016<br>18-08-2016 |
| EP 2506384 A1 | 03-10-2012 | EP 2506384 A1<br>JP 2012217332 A<br>US 2012249278 A1 | 03-10-2012<br>08-11-2012<br>04-10-2012 |

Form PCT/ISA/210 (patent family annex) (April 2005)